# FASCICULE DE BREVET EUROPEEN

(11) **EP 3 251 489 B1**
(45) Date de publication et mention de la délivrance du brevet: **04.09.2019**
(21) Numéro de dépôt: 17305624.3
(22) Date de dépôt: 30.05.2017
(51) Int. Cl.: A01D 34/66

(54) **FAUCHEUSE À BARRE DE COUPE À DISQUES ROTATIFS À COUTEAUX**
BALKENMÄHER MIT ROTIERENDEN MÄHMESSERSCHEIBEN
MOWER WITH CUTTING BAR HAVING ROTARY CUTTER DISCS

(30) Priorité: 01.06.2016 FR 1670280
(43) Date de publication de la demande: 06.12.2017
(73) Titulaire: Kuhn SA (Societe Anonyme), 67700 Saverne (FR)
(72) Inventeur: WILHELM, Joël, 57820 SAINT-LOUIS (FR); WOLFF, Michel, 67670 WALTENHEIM SUR ZORN (FR); WATTRON, Bernard, 67700 HAEGEN (FR)
(74) Mandataire: Nuss, Laurent

(56) Documents cités:
- EP-A1- 0 552 610
- EP-A1- 2 508 061
- DE-A1-102011 016 284
- FR-A1- 2 840 765

## Description

La présente invention concerne le domaine du machinisme agricole, plus particulièrement les équipements et machines de fauche, notamment ceux destinés à être montés sur l'arrière ou l'avant d'un tracteur, et a pour objet une faucheuse comprenant au moins une barre de coupe pourvue de disques rotatifs à couteaux.

De nombreuses réalisations de faucheuses de ce type sont déjà connues dans l'état de la technique, en particulier par les documents DE 10 2011 016 284 et EP 2 508 061.

En général, les barres de fauches ou de coupe de ces faucheuses comprennent :
- un carter creux allongé avec une paroi supérieure et une paroi inférieure,
- au moins un palier monté au niveau d'un orifice de la paroi supérieure du carter,
- au moins un disque solidaire d'un arbre support entraîné, lequel est monté avec guidage en rotation dans ledit palier,
- au moins un couteau fixé, avec une proéminence radiale et libre en rotation, sur ledit disque, le ou chaque palier étant solidarisé avec le carter par des moyens de fixation par vissage ou coopération au moins partielle d'un filetage et d'un taraudage.

L'arbre support est rigidement assemblé en partie supérieure, à l'extérieur du carter, avec le disque portant les couteaux et est solidaire, en partie inférieure et à l'intérieur du carter, d'un pignon ou d'une roue denté(e) engrenant avec un élément d'un train d'engrenages entraîné par la prise de force du tracteur, le palier intégrant un roulement à billes ou à aiguilles pour faciliter la rotation dudit arbre.

Les couteaux sont quant à eux montés au niveau des extrémités de lames de fixation assemblées rigidement au disque.

Dans les réalisations des documents DE et EP précités, les paliers sont de taille modeste, montés dans des orifices de faible dimension et solidarisés uniquement à la paroi supérieure du carter.

Une telle construction présente plusieurs inconvénients majeurs.

Un palier de taille modeste présente intrinsèquement une résistance limitée aux contraintes et aux chocs. De plus, sa fixation à la seule paroi supérieure constitue un facteur limitatif additionnel en termes de rigidité et de solidité de la construction, concentrant en outre localement la transmission des efforts au carter.

Enfin, l'ouverture du carter recevant le palier étant également de faible taille, le démontage, en vue de leur remplacement, de certains pignons et roues dentés montés dans le carter, nécessite la désolidarisation des deux parois et l'ouverture dudit carter. En variante, il peut être prévu un sous-dimensionnement desdits pignons et roues dentées, mais qui entraîne des chaînes cinématiques plus complexes et avec plus d'éléments.

De plus, dans ces réalisations, le palier est fixé à la paroi supérieure par des moyens de fixation apparents, saillants par rapport au carter et exposés à l'environnement extérieur.

Par conséquent, de la terre et d'autres débris s'agglutinent autour de ces parties saillantes, entraînant une altération de ces parties due particulièrement aux impacts de cailloux, cette altération pouvant rendre plus difficile, voire impossible un démontage du palier. De plus, l'accumulation de débris peut entrainer une résistance au mouvement et une usure plus importante des pièces mobiles due aux frottements.

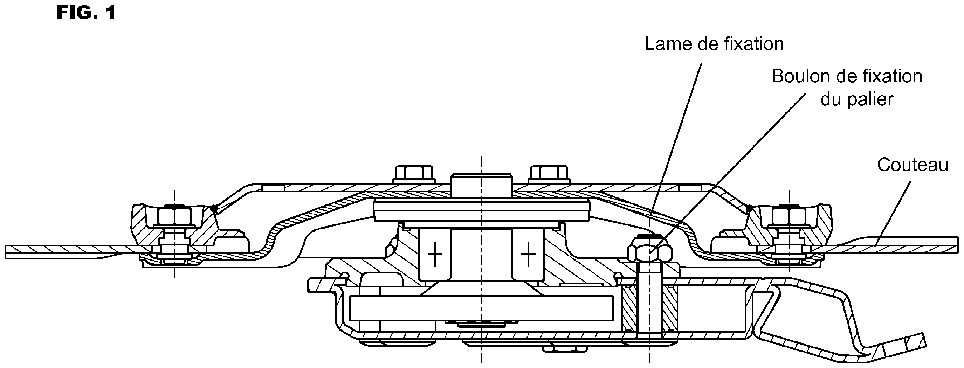

La barre de coupe de la faucheuse de la demanderesse connue sous la désignation "OPTIDISC" (marque déposée) et qui est représentée en coupe sur la figure 1, permet de remédier à au moins certains des inconvénients précités. Il en est de même de la barre de coupe connue du document FR 2 840 765 de la demanderesse.

En effet, dans ces barres de coupe, le palier est de dimension nettement plus importante et est solidarisé solidement avec les deux parois par des ensembles de fixation composés chacun de deux éléments assemblés mutuellement par vissage, des entretoises de rigidification empêchant l'écrasement du carter lors du serrage et assurant une répartition des contraintes.

De plus, l'orifice de montage du palier autorise le passage aisé de tous les pignons et roues dentés.

Néanmoins, les ensembles de fixation mis en oeuvre dans les réalisations connues précitées de la demanderesse comprennent des vis-écrous dont les filetages et les zones de vissage sont également en saillie au-dessus du palier correspondant, et donc exposés comme évoqué précédemment.

En outre, compte tenu de la taille radiale du palier, et donc de l'écartement radial des ensembles vis-écrou proéminents, ces éléments saillants empêchent les couteaux d'effectuer une révolution complète autour de leur axe (ces couteaux sont situés au plus près de la face supérieure du carter). Ceci implique une usure supplémentaire du couteau lors de collisions avec des obstacles : en effet, après avoir heurté un obstacle, le couteau rebondit sur l'obstacle puis tourne dans le sens contraire, parfois à grande vitesse.

Afin d'éviter qu'ils n'endommagent la lame de montage (pièce difficilement remplaçable), des butées spécifiques doivent être prévues, qui permettent l'amortissement du mouvement de retour du couteau lorsque celui-ci a rencontré un obstacle.

Ainsi, on aboutit à une construction plus complexe et à une usure plus rapide des couteaux.

Enfin, et surtout, les couteaux ne peuvent pas effectuer une rotation de 360°, c'est-à-dire qu'ils ne peuvent pas tourner librement.

La présente invention a pour but d'améliorer la faucheuse précitée de la demanderesse en vue d'éviter toute exposition saillante des parties fonctionnelles des ensembles de fixation du ou des paliers et d'autoriser une rotation à 360° du ou des couteaux.

A cet effet, l'invention a pour objet une faucheuse avec au moins une barre de coupe comprenant :
- un carter creux allongé comportant une paroi supérieure et une paroi inférieure,
- au moins un disque solidaire d'un arbre support,
- au moins un couteau fixé, avec proéminence radiale et libre en rotation, sur ledit disque,
- au moins un palier monté au niveau d'un orifice de la paroi supérieure du carter, et recevant avec guidage en rotation ledit arbre support,
le ou chaque palier étant solidarisé avec le carter par au moins un ensemble de fixation composé d'au moins deux éléments de fixation assemblés par vissage, directement ou indirectement,
faucheuse caractérisée en ce que, pour au moins un des ensembles de fixation du ou de chaque palier, au moins une partie, préférentiellement sensiblement la totalité, de la ou des zone(s) d'engagement ou de venue en prise mutuel(le) des parties taraudées ou filetée(s) des éléments de fixation est située entre des surfaces d'appui respectives desdits au moins deux éléments de fixation.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 2 est une vue de dessus, d'une faucheuse selon l'invention montée sur un système d'attelage d'un tracteur ;
la figure 3 est une vue de dessus et par transparence partielle (certains disques et paliers ainsi que la paroi supérieure étant démontés) d'une partie d'une barre de coupe de faucheuse selon un mode de réalisation de l'invention ;
les figures 4A et 4B sont des vues en coupe d'une barre de coupe selon l'invention respectivement selon des plans de coupe A-A (passant par un ensemble de fixation arrière et par l'axe du palier) et B-B (passant par un ensemble de fixation avant) comme indiqués sur la figure 3, ce en accord avec une variante de réalisation particulière des ensembles de fixation des paliers support des disques rotatifs, et,
les figures 5 à 9 sont des vues de détail en coupe illustrant d'autres variantes constructives d'un ensemble de fixation de palier support selon l'invention.

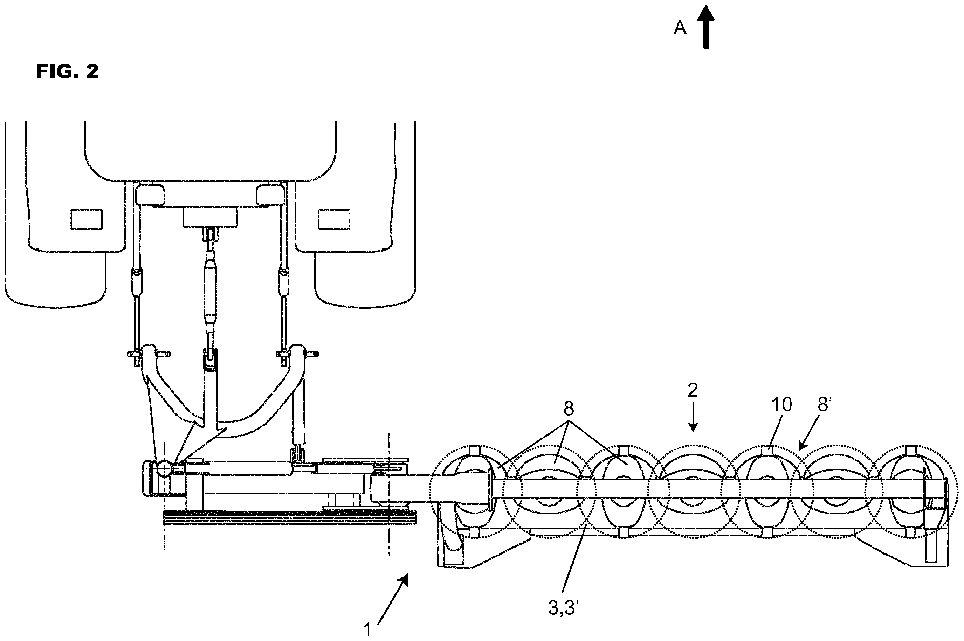

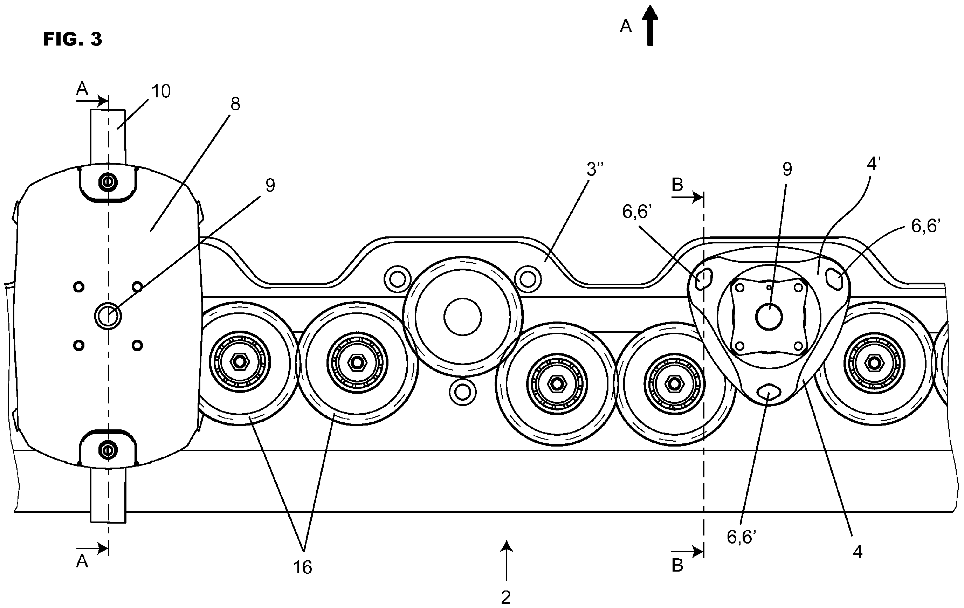

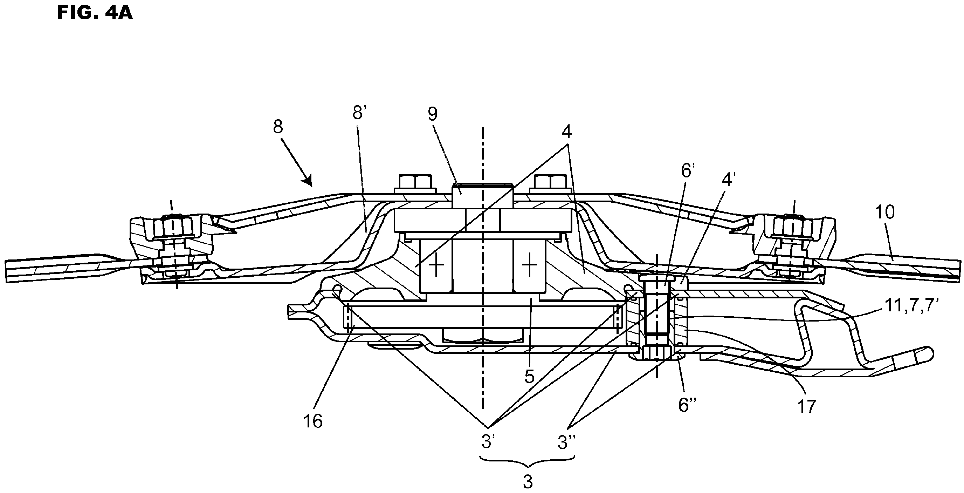

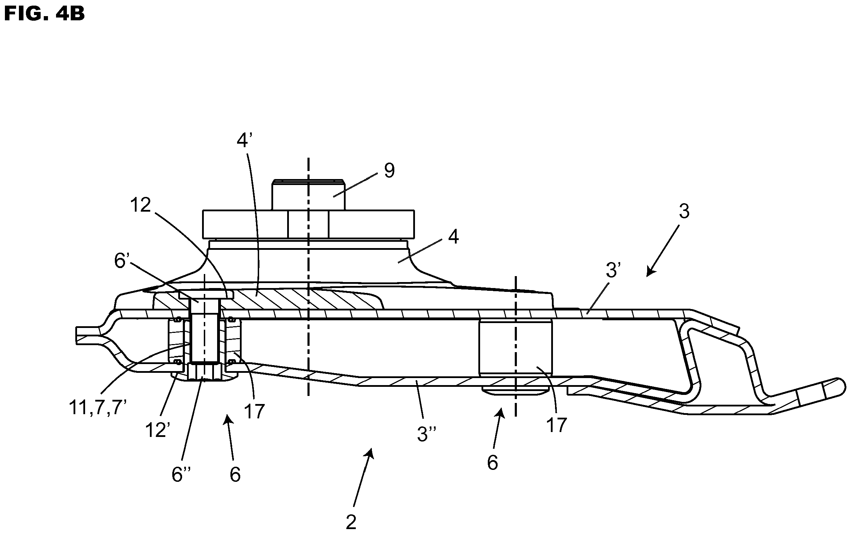

La figure 2 et partiellement les figures 3 et 4 montrent une faucheuse 1 avec au moins une barre de coupe 2 comprenant :
- un carter 3 creux allongé comportant une paroi supérieure 3' et une paroi inférieure 3",
- au moins un disque 8, solidaire d'un arbre support 9,
- au moins un couteau 10 fixé, avec proéminence radiale et libre en rotation, sur ledit disque 8,
- au moins un palier 4 monté au niveau d'un orifice 5 de la paroi supérieure 3' du carter 3, et recevant avec guidage en rotation ledit arbre support 9,
le ou chaque palier 4 étant solidarisé avec le carter 3 par au moins un ensemble de fixation 6 composé d'au moins deux éléments de fixation 6', 6" assemblés par vissage, directement ou indirectement.

Conformément à l'invention, il est prévu que pour au moins un des ensembles de fixation 6 du ou de chaque palier 4, au moins une partie, préférentiellement sensiblement la totalité, de la ou des zone(s) 11 d'engagement ou de venue en prise mutuel(le) respectivement des partie(s) taraudée(s) 7' et partie(s) filetée(s) 7 des éléments de fixation 6',6" est située entre des surfaces d'appui 12 et 12' respectives desdits au moins deux éléments de fixation 6', 6".

Ainsi, grâce à l'invention, la ou les zone(s) sensible(s) d'engagement et de liaisonnement par vissage des composantes constitutives 6', 6" de chaque ensemble de fixation 6 ne subit(ssent) pas d'exposition aux agressions de l'environnement extérieur et se retrouve(nt) protégée(s) par le carter 3 et/ou le palier 4. En outre, une telle construction permet également de réduire le degré de proéminence des éléments de fixation 6', 6" par rapport à leurs surfaces d'appui respectives 12 et 12'.

Comme l'illustrent les figures 4 à 9 à titres d'exemples, pour chaque ensemble de fixation, une première surface d'appui 12, associée à un premier élément de fixation 6', est située au niveau du palier 4 concerné ou de la paroi supérieure 3' du carter 3 et une seconde surface d'appui 12', associée à un deuxième élément de fixation 6", est située au niveau de la paroi inférieure 3" du carter 3, pour un assemblage avec les deux parois opposées 3' et 3" du carter 3.

On entend dans la présente par zone d'appui 12, 12' desdits au moins deux éléments de fixation 6', 6", la surface sur laquelle la pression exercée par l'élément de fixation 6', 6" considéré, lors du serrage de l'ensemble de fixation 6, s'applique.

Dans les variantes de réalisations représentées aux figures 4 à 9, ces surfaces d'appui 12, 12' sont situées au niveau de l'une des parois 3', 3" ou du palier 4.

Néanmoins, en cas de mise en oeuvre de pièces intermédiaires ou supplémentaires d'entretoisement, telles que par exemple des rondelles, lesdites surfaces d'appui 12, 12' se situent au niveau des faces desdites pièces supplémentaires en contact avec les éléments de fixation 6', 6".

Par zone d'engagement 11, on entend dans la présente les zones filetées 7 et taraudées 7' qui coopèrent mutuellement par vissage et fournissent une fonction de liaisonnement

L'homme du métier comprend qu'en fonction de la nature de la solidarisation et de la conception de l'assemblage entre un palier 4 et le carter 3, le nombre d'ensembles de fixation 6 mis en oeuvre peut varier.

En effet, selon un mode de réalisation non représenté, le palier 4 et le carter 3 peuvent être conçus pour être assemblés ou préassemblés par imbrication ou coopération mécanique de sites complémentaires (par exemple un assemblage à baïonnettes ou par accrochage), de telle manière qu'un unique ensemble de fixation 6 peut alors être suffisant pour verrouiller ou bloquer un tel assemblage ou pré-assemblage mécanique.

Toutefois, selon l'invention, il est préconisé de mettre en oeuvre au moins deux ensembles de fixation 6, préférentiellement comme le montre la figure 3, au moins trois et de manière optimale (meilleur compromis efficience/coût) exactement trois. Bien qu'une uniformisation des réalisations des solidarisations des différents paliers 4 soit préférée, des solidarisations différentes constructivement (par exemple en termes de nombre et d'emplacement des ensembles 6) peuvent être envisagées, chacun de ces ensembles pouvant ou non présenter une ou plusieurs des dispositions préconisées par l'invention.

En outre, en termes de variantes de réalisations pratiques, de nombreuses possibilités peuvent être prévues pour chaque ensemble de fixation 6. En cas de présence d'une pluralité d'ensembles de fixation 6 pour la solidarisation des différents paliers 4 aux parois 3' et 3" du carter, des ensembles 6 de constructions différentes peuvent être envisagés.

Les figures 4 à 9 illustrent, à titre d'exemples, plusieurs variantes de réalisation d'un tel ensemble de fixation 6 selon l'invention.

De manière préférée, l'ensemble 6 est constitué de deux éléments de fixation 6' et 6" coopérants (figures 4, 5, 6, 8 et 9).

Selon une première variante ressortant des figures 4, 6, 8 et 9, au moins un, et préférentiellement chaque, ensemble de fixation 6 est constitué de deux pièces séparées, à savoir, par une vis 6' et par un écrou douille taraudé 6" formant les deux éléments de fixation coopérants de cet ensemble : l'ensemble de fixation est alors constitué par un premier élément de fixation 6' étant une vis et un deuxième élément de fixation 6" étant un écrou douille taraudé.

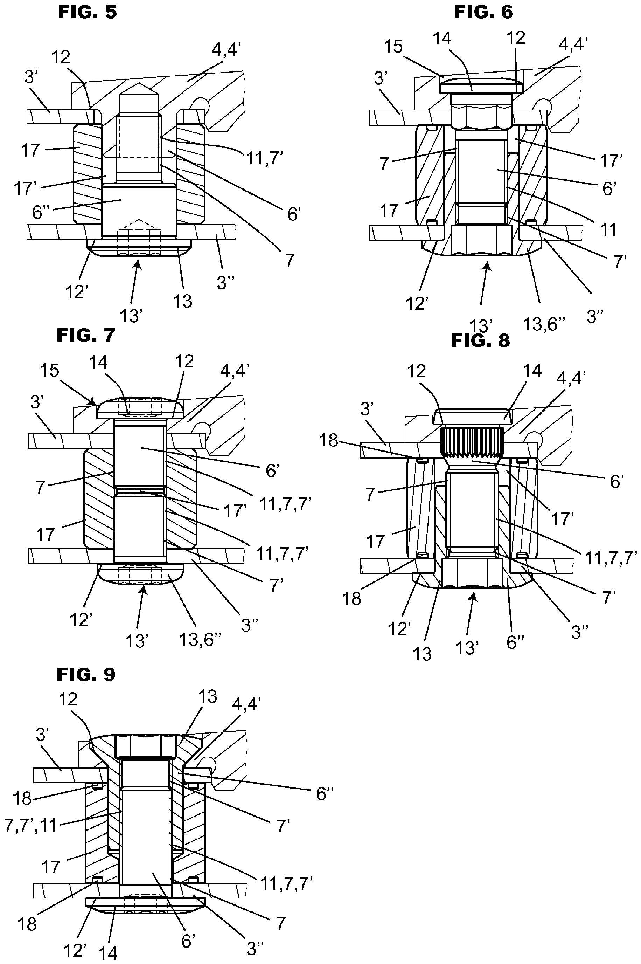

Comme le montrent notamment les figures 6, 8 et 9 à titre d'exemples, l'écrou douille 6" consiste avantageusement en une bague taraudée équipée d'une tête 13 ou d'une collerette venant en appui sur une surface 12, 12' correspondante d'une des parois 3', 3" ou du palier 4.

La vis 6' et l'écrou 6" peuvent, de manière indifférente et comme le montrent les figures précitées, constituer l'un l'élément de fixation supérieur (en appui sur 4 ou sur 3') et l'autre l'élément de fixation inférieur (en appui sur 3"), ou vice versa.

En accord avec une seconde variante illustrée à la figure 5, il peut être prévu que, pour au moins un, ou éventuellement chaque, ensemble de fixation 6, l'élément de fixation 6' en appui sur la paroi supérieure 3' du carter 3 est intégré structurellement au palier 4 concerné, en étant avantageusement réalisé d'un seul tenant avec une patte ou une collerette d'appui 4' de ce palier 4, et comporte un orifice borgne avec une partie taraudée 7'. On remarque, sur cette figure 5, que la patte ou la collerette d'appui 4' du palier 4 comportant cet orifice taraudé 7' se prolonge avantageusement pour former une douille taraudée 6' borgne pénétrant dans le carter 3 à travers une ouverture dans la paroi supérieure 3' dans laquelle elle est reçue de manière calée.

Dans cette variante, l'ensemble de fixation 6 ne comporte qu'une pièce séparée 6" sous forme de vis et la surface d'appui 12 liée à l'élément de fixation 6' intégré correspond à celle de la patte ou collerette 4' sur la paroi supérieure 3'.

La collerette 4' est définie comme étant la partie du palier 4 en appui avec le carter ou la pièce sur laquelle il est assemblé.

Enfin, et conformément à une troisième variante de réalisation illustrée à titre d'exemple sur la figure 7, au moins un, éventuellement chaque, ensemble de fixation 6 est constitué par trois éléments de fixation 6', 6", 17 coopérants, à savoir, d'une part, un premier et un second éléments de fixation filetés 6' et 6" venant respectivement en appui sur le palier 4 concerné et sur la paroi inférieure 3" du carter 3 et, d'autre part, un troisième élément de fixation 17 taraudé coopérant par vissage avec chacun desdits premier et deuxième éléments de fixation 6' et 6" pour établir une liaison rigide entre eux.

Cet élément 17 de liaisonnement intermédiaire présente préférentiellement des zones taraudées s'étendant au moins sur la totalité des zones d'engagement 11 possibles des premier et second éléments de fixation 6', 6".

Les deux vis 6' et 6", préférentiellement identiques, présentent avantageusement des dimensions telles qu'elles s'engagent de part et d'autre sur une profondeur maximale, jusqu'à venir pratiquement en contact mutuel (figure 7), le troisième élément de fixation 17 étant avantageusement taraudé sur toute sa longueur axiale.

Afin de faciliter l'assemblage par vissage des éléments de fixation 6' et 6", l'un de ces dernier peut être bloqué en rotation à l'état monté, préférentiellement l'élément de fixation 6' en appui sur le palier 4 concerné.

Ce blocage en rotation peut résulter d'une coopération de forme entre la tête de l'élément 6' et le site de réception 15 correspondant du palier 4 ou de la paroi supérieure 3' du carter. Ainsi, comme le montre la figure 6, on peut prévoir des formes hexagonales complémentaires de la tête 14 de l'élément 6' et de l'ouverture de la paroi supérieure 3' ou encore des cannelures au niveau de la tête 14 de l'élément 6' et un assemblage en force et avec déformation des bords de l'ouverture de la paroi supérieure 3', traversée par l'élément 6.

Lorsqu'aucun blocage constructif n'est prévu pour l'un des éléments de fixation 6' et 6", ces derniers peuvent comporter des empreintes 13' pour l'engagement de clés ou d'embouts.

En tout état de cause, et comme le montrent les figures 4 à 9, au moins l'élément de fixation 6" en appui sur la face extérieure de la paroi inférieure 3" du carter 3, comporte une tête 13 pourvue d'une empreinte 13' adaptée pour un engagement avec un outil, préférentiellement une empreinte en creux 13' dans une tête 13 plate. Cette empreinte 13' permet la rotation ou le blocage en rotation de l'élément de fixation 6', 6" concerné.

De même, il est avantageusement prévu, selon l'invention, que l'élément de fixation supérieur 6' est configuré et monté de telle manière qu'il n'est sensiblement pas saillant, ni proéminent par rapport à son environnement de montage.

A cet effet, lorsque l'élément de fixation supérieur 6' ne fait pas directement partie intégrante du palier 4 (figure 7), la tête 14 de cet élément 6' en appui sur le palier 4 concerné est reçue dans un renfoncement 15 d'une collerette d'appui 4' ou d'une partie d'une collerette de montage dudit palier 4, de manière sensiblement affleurante ou en retrait (figures 4 et 6 à 9).

Grâce à cette disposition, les ensembles de fixation 6 sont totalement escamotés et ne constituent plus un obstacle à la libre rotation sur 360° des couteaux 10.

De manière avantageuse, et comme le montre la figure 3, chaque palier 4 est fixé au carter par l'intermédiaire d'au moins trois ensembles de fixation 6. De plus, les paliers 4 comportent avantageusement une collerette 4' de forme triangulaire, pour notamment une optimisation du rapport rigidité/quantité de matière.

Les figures 3, 4A et 4B illustrent d'autres caractéristiques constructives avantageuses de l'invention.

Ainsi, sur le ou chaque disque 8 peut être rigidement solidarisée une lame 8' de montage pour les couteaux 10, ces lames 8' présentant une conformation épousant localement sensiblement la forme extérieure du palier 4 correspondant, avec un dégagement autorisant une rotation complète desdits couteaux 10 autour de leurs axes de montage respectifs.

En outre, l'invention prévoit avantageusement que chaque orifice 5 ménagé dans la paroi supérieure 3' du carter 3, traversé par un arbre support entraîné 9 et au niveau duquel est monté un palier 4 de guidage en rotation, présente une ouverture de dimension suffisante pour le passage de chacun des différents éléments d'engrenage 16 logés dans le carter 3 et assurant l'entraînement en rotation des arbres supports 9.

Cet orifice 5 est avantageusement obturé par ledit palier 4 qui est pourvu d'une formation radiale discoïdale constituant une collerette de montage et de fixation 4' en appui sur la paroi supérieure 3' du carter 3 (autour de l'ouverture 5) et présentant les surfaces d'appui 12 pour les éléments de fixation 6 concernés.

Pour renforcer structurellement le corps creux que forme le carter 3 et le rigidifier, tout en fournissant une protection spécifique pour les parties taraudées/filetées des éléments de fixation 6' et 6" coopérants, la barre de coupe 2 peut comporter, au niveau de chaque ensemble de fixation 6, une entretoise tubulaire 17 s'étendant entre les parois supérieure 3' et inférieure 3" du carter 3 et recevant dans son passage traversant 17' l'un au moins des éléments de fixation 6' et 6" formant l'ensemble 6 concerné, préférentiellement au moins la zone 11 d'engagement ou de venue en prise mutuel(le) des parties de liaisonnement par vissage 7, 7' de ces deux éléments de fixation 6' et 6".

Lorsque l'ensemble de fixation 6 comprend trois éléments 6', 6" et 17 comme représenté à la figure 7 et comme précédemment, il peut être prévu que l'entretoise 17 soit pourvue d'un taraudage intérieur 7' dans lequel viennent en engagement par vissage les parties filetées 7 des premier et second éléments de fixation 6' et 6" sous forme de vis, éventuellement identiques et avantageusement avec une profondeur d'engagement maximale. L'entretoise 17 constitue alors simultanément une douille taraudée recevant par vissage les éléments de fixation supérieur et inférieur 6' et 6".

Selon une autre caractéristique de l'invention, chaque entretoise 17 est montée en appui étanche sous pression entre les parois inférieure 3" et supérieure 3' du carter 3, définissant ainsi un logement de réception isolé de l'environnement extérieur (à l'aide de joints de compression 18 par exemple).

En accord avec une autre caractéristique ressortant des figures 4A et 4B, l'invention peut prévoir que les entretoises 17 sont, par rapport à la direction d'avance A au travail de la faucheuse 1, situées soit devant, soit derrière les arbres support entraînés 9, les entretoises situées devant cet arbre 9 présentant une dimension longitudinale ou hauteur moins importante que les entretoises situées derrière cet arbre 9.

Par ailleurs, la figure 3 illustre un arrangement angulaire préféré de trois ensembles de fixation 6 autour de l'axe du palier 4 (les deux ensembles 6 situés devant sont alignés parallèlement à l'axe longitudinal de la barre de coupe 2).

Selon une caractéristique supplémentaire, ressortant notamment des figures 4A et 4B, il peut être prévu que les parois supérieure 3' et inférieure 3" formant par coopération le carter 3 consistent chacune en une pièce d'un seul tenant, avantageusement réalisée par emboutissage, ces parois 3' et 3" étant préférentiellement assemblées par soudure périphérique au niveau de collerettes d'assemblage mutuellement coïncidentes.

Le carter 3 peut avantageusement, comme le montrent notamment les figures 4A et 4B, présenter une constitution similaire à celle décrite dans la demande de brevet français déposée ce jour par la demanderesse et portant sur une barre de coupe de faucheuse à disques.

## Revendications

1. Faucheuse (1) avec au moins une barre de coupe (2) comprenant :
- un carter (3) creux allongé comportant une paroi supérieure (3') et une paroi inférieure (3"),
- au moins un disque (8) solidaire d'un arbre support (9),
- au moins un couteau (10) fixé, avec proéminence radiale et libre en rotation, sur ledit disque (8),
- au moins un palier (4) monté au niveau d'un orifice (5) de la paroi supérieure (3') du carter (3), et recevant avec guidage en rotation ledit arbre support (9),
le ou chaque palier (4) étant solidarisé avec le carter (3) par au moins un ensemble de fixation (6) composé d'au moins deux éléments de fixation (6', 6") assemblés par vissage, directement ou indirectement,
faucheuse (1) **caractérisée en ce que**, pour au moins un des ensembles de fixation (6) du ou de chaque palier (4), au moins une partie, préférentiellement sensiblement la totalité, de la ou des zone(s) (11) d'engagement ou de venue en prise mutuel(le) des partie(s) taraudée(s) (7') et partie(s) filetée(s) (7) des éléments de fixation (6',6") est située entre des surfaces d'appui (12 et 12') respectives desdits au moins deux éléments de fixation (6',6").

2. Faucheuse selon la revendication 1, **caractérisée en ce qu'**une première surface d'appui (12), associée à un premier élément de fixation (6'), est située au niveau du palier (4) concerné ou de la paroi supérieure (3') du carter (3) et **en ce que** la seconde surface d'appui (12'), associée à un deuxième élément de fixation (6"), est située au niveau de la paroi inférieure (3") du carter (3).

3. Faucheuse selon la revendication 1 ou 2, **caractérisée en ce que** chaque ensemble de fixation (6) est constitué par une vis (6') et par un écrou douille taraudé (6") formant les deux éléments de fixation coopérants de cet ensemble.

4. Faucheuse selon la revendication 1 ou 2, **caractérisée en ce que**, pour au moins un ensemble de fixation (6), l'élément de fixation (6') en appui sur la paroi supérieure (3') du carter (3) est intégré structurellement au palier (4) concerné, en étant avantageusement réalisé d'un seul tenant avec une patte ou une collerette d'appui (4') de ce palier (4), et comporte un orifice borgne avec une partie taraudée (7').

5. Faucheuse selon la revendication 1 ou 2, **caractérisée en ce qu'**au moins un ensemble de fixation (6) est constitué par trois éléments de fixation (6', 6", 17) coopérants, à savoir, d'une part, un premier et un second éléments de fixation filetés (6',6") venant respectivement en appui sur le palier (4) concerné et sur la paroi inférieure (3") du carter (3) et, d'autre part, un troisième élément de fixation (17) taraudé coopérant par vissage avec chacun desdits premier et deuxième éléments de fixation (6',6") pour établir une liaison rigide entre eux.

6. Faucheuse selon l'une quelconque des revendications 1 à 5, **caractérisée en ce que** l'un des éléments de fixation (6', 6"), préférentiellement l'élément de fixation (6') en appui sur le palier (4) concerné, est bloqué en rotation à l'état monté.

7. Faucheuse selon l'une quelconque des revendications 1 à 6, **caractérisée en ce qu'**au moins l'élément de fixation (6") en appui sur la face extérieure de la paroi inférieure (3") du carter (3), comporte une tête (13) pourvue d'une empreinte (13') adaptée pour un engagement avec un outil, préférentiellement une empreinte en creux dans une tête (13) plate.

8. Faucheuse selon l'une quelconque des revendications 1 à 3 et 5 à 7, **caractérisée en ce que** la tête (14) d'un l'élément de fixation (6') en appui sur le palier (4) concerné est reçue dans un renfoncement (15) d'une collerette d'appui (4') ou d'une partie d'une collerette de montage dudit palier (4), de manière sensiblement affleurante ou en retrait.

9. Faucheuse selon l'une quelconque des revendications 1 à 8, **caractérisée en ce que** chaque palier (4) est fixé au carter par l'intermédiaire d'au moins trois ensembles de fixation (6).

10. Faucheuse selon l'une quelconque des revendications 1 à 9, **caractérisée en ce que** sur le disque (8) est rigidement solidarisée une lame (8') de montage pour les couteaux (10), ces lames (8') présentant une conformation épousant localement sensiblement la forme extérieure du palier (4) correspondant, avec un dégagement autorisant une rotation complète desdits couteaux (10) autour de leurs axes de montage respectifs.

11. Faucheuse selon l'une quelconque des revendications 1 à 10, **caractérisée en ce que** chaque orifice (5) ménagé dans la paroi supérieure (3') du carter (3), traversé par un arbre support entraîné (9) et au niveau duquel est monté un palier (4) de guidage en rotation, présente une ouverture de dimension suffisante pour le passage de chacun des différents éléments d'engrenage (16) logés dans le carter (3) et assurant l'entraînement en rotation des arbres supports (9), ledit orifice (5) étant avantageusement obturé par ledit palier (4) pourvu d'une formation radiale discoïdale constituant une collerette de montage et de fixation (4') en appui sur la paroi supérieure (3') du carter (3) et présentant les surfaces d'appui (12) pour les éléments de fixation (6) concernés.

12. Faucheuse selon l'une quelconque des revendications 1 à 11, **caractérisée en ce qu'**elle comporte, au niveau de chaque ensemble de fixation (6), une entretoise tubulaire (17) s'étendant entre les parois supérieure (3') et inférieure (3") du carter (3) et recevant dans son passage traversant (17') l'un au moins des éléments de fixation (6' et 6") formant l'ensemble (6) concerné, préférentiellement au moins la zone (11) d'engagement ou de venue en prise mutuel(le) des parties de liaisonnement par vissage (7, 7') de ces deux éléments de fixation (6' et 6").

13. Faucheuse selon les revendications 5 et 12, **caractérisée en ce que** l'entretoise tubulaire (17) est pourvue d'un taraudage (7'), sur une partie au moins de sa face intérieure, dans lequel viennent en engagement par vissage les parties filetées (7) des premier et second éléments de fixation (6' et 6") sous forme de vis, éventuellement identiques et avantageusement avec une profondeur d'engagement maximale.

14. Faucheuse selon la revendication 12 ou 13, **caractérisée en ce que** chaque entretoise (17) est montée en appui étanche sous pression entre les parois inférieure (3") et supérieure (3') du carter (3), définissant ainsi un logement de réception isolé de l'environnement extérieur.

15. Faucheuse selon l'une quelconque des revendications 12 à 14, **caractérisée en ce que** les entretoises (17) sont, par rapport à la direction d'avance (A) au travail de la faucheuse (1), situées soit devant, soit derrière les arbres support entraînés (9), les entretoises situées devant cet arbre (9) présentant une dimension longitudinale ou hauteur moins importante que les entretoises situées derrière cet arbre (9).

16. Faucheuse selon l'une quelconque des revendications 1 à 15, **caractérisée en ce que** les parois supérieure (3') et inférieure (3") formant par coopération le carter (3) consistent chacune en une pièce d'un seul tenant, avantageusement réalisée par emboutissage, ces parois (3' et 3") étant préférentiellement assemblées par soudure périphérique au niveau de collerettes d'assemblage mutuellement coïncidentes.

## Patentansprüche

1. Mäher (1) mit mindestens einem Mähbalken (2), aufweisend:
- ein längliches hohles Gehäuse (3), das eine obere Wand (3') und eine untere Wand (3") umfasst,
- mindestens eine Scheibe (8), die fest mit einer Tragwelle (9) verbunden ist,
- mindestens ein befestigtes Messer (10), mit einem radialen Vorsprung und freidrehend, an der Scheibe (8),
- mindestens ein Lager (4), das auf der Höhe einer Öffnung (5) der oberen Wand (3') des Gehäuses (3) montiert ist, und mit Drehführung die Tragwelle (9) aufnimmt,
wobei das oder jedes Lager (4) mittels mindestens einer Befestigungsbaugruppe (6), die aus mindestens zwei Befestigungselementen (6', 6") besteht, die miteinander verschraubt sind, direkt oder indirekt fest mit dem Gehäuse (3) verbunden ist,
wobei der Mäher (1) **dadurch gekennzeichnet ist, dass** für mindestens eine der Befestigungsbaugruppen (6) des oder jedes Lagers (4) zumindest ein Abschnitt, vorzugsweise im Wesentlichen die Gesamtheit, des Bereichs oder der Bereiche (11) des gegenseitigen Eingriffs des Innengewindeabschnitts/der Innengewindeabschnitte (7') und Gewindeabschnitts/Gewindeabschnitte (7) der Befestigungselemente (6', 6") zwischen jeweiligen Anlageflächen (12 und 12') der mindestens zwei Befestigungselemente (6', 6") angeordnet ist.

2. Mäher nach Anspruch 1, **dadurch gekennzeichnet, dass** eine erste Anlagefläche (12), die einem ersten Befestigungselement (6') zugeordnet ist, auf der Höhe des betreffenden Lagers (4) oder der oberen Wand (3') des Gehäuses (3) angeordnet ist und dadurch, dass die zweite Anlagefläche (12'), die einem zweiten Befestigungselement (6") zugeordnet ist, auf der Höhe der unteren Wand (3") des Gehäuses (3) angeordnet ist.

3. Mäher nach Anspruch 1 oder 2, **dadurch gekennzeichnet, dass** jede Befestigungsbaugruppe (6) aus einer Schraube (6') und aus einer Gewindehülsenmutter mit Innengewinde (6") besteht, welche die beiden zusammenwirkenden Befestigungselemente dieser Baugruppe bilden.

4. Mäher nach Anspruch 1 oder 2, **dadurch gekennzeichnet, dass** für mindestens eine Befestigungsbaugruppe (6) das Befestigungselement (6'), das sich in Anlage an der oberen Wand (3') des Gehäuses (3) befindet, strukturell mit dem betreffenden Lager (4) integriert ist, indem es vorteilhafterweise einstückig mit einer Stützlasche oder einem Stützflansch (4') dieses Lagers (4) ausgeführt ist, und ein Sackloch mit einem Innengewindeabschnitt (7') umfasst.

5. Mäher nach Anspruch 1 oder 2, **dadurch gekennzeichnet, dass** mindestens eine Befestigungsbaugruppe (6) aus drei zusammenwirkenden Befestigungselementen (6', 6", 17) besteht, und zwar zum einen aus einem ersten und zweiten Gewindebefestigungselement (6', 6"), die jeweils an dem betreffenden Lager (4) und an der unteren Wand (3") des Gehäuses (3) zur Anlage kommen, und zum anderen aus einem dritten Befestigungselement (17) mit Innengewinde, das durch Verschraubung sowohl mit dem ersten als auch dem zweiten Befestigungselement (6', 6") zusammenwirkt, um eine starre Verbindung zwischen ihnen herzustellen.

6. Mäher nach einem der Ansprüche 1 bis 5, **dadurch gekennzeichnet, dass** eines der Befestigungselemente (6', 6"), vorzugsweise das Befestigungselement (6'), das an dem betreffenden Lager (4) anliegt, in montiertem Zustand verdrehgesichert ist.

7. Mäher nach einem der Ansprüche 1 bis 6, **dadurch gekennzeichnet, dass** zumindest das Befestigungselement (6"), das an der Außenseite der unteren Wand (3") des Gehäuses (3) anliegt, einen Kopf (13) umfasst, der mit einer Einprägung (13') versehen ist, die für einen Eingriff mit einem Werkzeug angepasst ist, vorzugsweise eine vertiefte Einprägung in einem flachen Kopfstück (13).

8. Mäher nach einem der Ansprüche 1 bis 3 und 5 bis 7, **dadurch gekennzeichnet, dass** das Kopfstück (14) eines Befestigungselements (6'), das an dem betreffenden Lager (4) anliegt, im Wesentlichen bündig oder zurückversetzt in einer Aussparung (15) eines Stützflanschs (4') oder einem Abschnitt eines Montageflanschs des Lagers (4) aufgenommen ist.

9. Mäher nach einem der Ansprüche 1 bis 8, **dadurch gekennzeichnet, dass** jedes Lager (4) mittels mindestens dreier Befestigungsbaugruppen (6) am Gehäuse befestigt ist.

10. Mäher nach einem der Ansprüche 1 bis 9, **dadurch gekennzeichnet, dass** an der Scheibe (8) für die Messer (10) eine Montageplatte (8') starr verbunden ist, wobei diese Platten (8') eine sich stellenweise im Wesentlichen der äußeren Form des entsprechenden Lagers (4) anpassende Formgebung aufweisen, mit einem Freiraum, der eine vollständige Drehung der Messer (10) um ihre jeweiligen Montageachsen erlaubt.

11. Mäher nach einem der Ansprüche 1 bis 10, **dadurch gekennzeichnet, dass** jede Öffnung (5), die in der oberen Wand (3') des Gehäuses (3) vorgesehen ist, die von einer angetriebenen Tragwelle (9) durchquert wird und auf deren Höhe ein Lager (4) zur Drehführung montiert ist, eine Öffnung ausreichender Größe für den Durchgang jedes der verschiedenen Getriebeelemente (16) aufweist, die in dem Gehäuse (3) aufgenommen sind und den Drehantrieb der Tragwellen (9) gewährleisten, wobei die Öffnung (5) vorteilhafterweise von dem Lager (4) verschlossen wird, das mit einer radialen scheibenförmigen Ausformung versehen ist, die einen Montage- und Befestigungsflansch (4') bildet, der an der oberen Wand (3') des Gehäuses (3) anliegt, und die die Anlageflächen (12) für die betreffenden Befestigungselemente (6) aufweist.

12. Mäher nach einem der Ansprüche 1 bis 11, **dadurch gekennzeichnet, dass** er auf der Höhe jeder Befestigungsbaugruppe (6) einen rohrförmigen Abstandshalter (17) umfasst, der sich zwischen der oberen (3') und unteren (3") Wand des Gehäuses (3) erstreckt, und in seinem durchquerten Durchgang (17') mindestens das eine der Befestigungselemente (6' und 6"), welche die betreffende Baugruppe (6) bilden, vorzugsweise mindestens den Bereich (11) des gegenseitigen Eingriffs der Schraubverbindungsabschnitte (7, 7') dieser beiden Befestigungselemente (6' und 6"), aufnimmt.

13. Mäher nach den Ansprüchen 5 und 12, **dadurch gekennzeichnet, dass** der rohrförmige Abstandshalter (17) zumindest an einem Abschnitt seiner Innenseite mit einem Innengewinde (7') versehen ist, in dem die Gewindeabschnitte (7) des ersten und zweiten Befestigungselements (6' und 6") in Schraubenform, gegebenenfalls identisch und vorteilhafterweise mit einer maximalen Eingriffstiefe, durch Verschraubung in Eingriff gelangen.

14. Mäher nach Anspruch 12 oder 13, **dadurch gekennzeichnet, dass** jeder Abstandshalter (17) unter Druck in dichter Anlage zwischen der unteren (3") und oberen (3') Wand des Gehäuses (3) montiert ist, und so einen von der äußeren Umgebung isolierten Sitz zur Aufnahme definiert.

15. Mäher nach einem der Ansprüche 12 bis 14, **dadurch gekennzeichnet, dass** die Abstandshalter (17) in Bezug auf die Fahrtrichtung (A) bei der Arbeit des Mähers (1) entweder vor oder hinter den angetriebenen Tragwellen (9) angeordnet sind, wobei die Abstandshalter, die vor dieser Welle (9) angeordnet sind, eine geringere Längsabmessung oder Höhe aufweisen als die Abstandshalter, die hinter dieser Welle (9) angeordnet sind.

16. Mäher nach einem der Ansprüche 1 bis 15, **dadurch gekennzeichnet, dass** die obere (3') und untere (3") Wand, die zusammenwirkend das Gehäuse (3) bilden, jeweils aus einem einstückigen Teil bestehen, vorteilhafterweise durch Tiefziehen hergestellt, wobei die Wände (3' und 3") vorzugsweise durch eine umlaufende Schweißnaht auf der Höhe der miteinander zusammentreffenden Verbindungsflansche zusammengefügt werden.

## Claims

1. Mowing machine (1) with at least one cutter bar (2) comprising:
- an elongate hollow housing (3) comprising an upper wall (3') and a lower wall (3"),
- at least one disc (8) integral with a supporting shaft (9),
- at least one radially protruding and freely rotatable blade (10) fixed to said disc (8),
- at least one bearing (4) mounted at the level of an orifice (5) in the upper wall (3') of the housing (3), and receiving said supporting shaft (9) with rotational guiding,
the or each bearing (4) being rigidly connected to the housing (3) by at least one fixing assembly (6) composed of at least two fixing elements (6', 6") assembled by screwing, directly or indirectly,
mowing machine (1) **characterised in that**, for at least one of the fixing assemblies (6) of the or each bearing (4), at least a part, preferably substantially the whole, of the zone(s) (11) of mutual engagement or gripping of the internally threaded part(s) (7') and externally threaded part(s) (7) of the fixing elements (6', 6") is situated between respective supporting surfaces (12 and 12') of said at least two fixing elements (6', 6").

2. Mowing machine according to claim 1, **characterised in that** a first supporting surface (12), associated with a first fixing element (6'), is situated at the level of the bearing (4) concerned or of the upper wall (3') of the housing (3) and **in that** the second supporting surface (12'), associated with a second fixing element (6"), is situated at the level of the lower wall (3") of the housing (3).

3. Mowing machine according to claim 1 or 2, **characterised in that** each fixing assembly (6) consists of a bolt (6') and an internally threaded sleeve nut (6") forming the two cooperating fixing elements of this assembly.

4. Mowing machine according to claim 1 or 2, **characterised in that**, for at least one fixing assembly (6), the fixing element (6') bearing on the upper wall (3') of the housing (3) is integrated structurally with the bearing (4) concerned, while being advantageously constructed in one piece with a supporting foot or collar (4') of this bearing (4), and comprises a blind orifice with an internally threaded part (7').

5. Mowing machine according to claim 1 or 2, **characterised in that** at least one fixing assembly (6) consists of three cooperating fixing elements (6', 6", 17), namely on the one hand first and second externally threaded fixing elements (6', 6") which respectively come to bear on the bearing (4) concerned and on the lower wall (3") of the housing (3) and, on the other hand, a third, internally threaded fixing element (17) cooperating by screwing to each of said first and second fixing elements (6', 6") in order to establish a rigid connection between them.

6. Mowing machine according to any one of claims 1 to 5, **characterised in that** one of the fixing elements (6', 6"), preferably the fixing element (6') which bears on the bearing (4) concerned, is prevented from rotating in the mounted state.

7. Mowing machine according to any one of claims 1 to 6, **characterised in that** at least one fixing element (6") which bears on the outer face of the lower wall (3") of the housing (3) comprises a head (13) provided with an indentation (13') adapted for engagement with a tool, preferably a hollow indentation in a flat head (13).

8. Mowing machine according to any one of claims 1 to 3 and 5 to 7, **characterised in that** the head (14) of one fixing element (6') which bears on the bearing (4) concerned is received in a recess (15) in a supporting collar (4') or part of a collar for assembly of said bearing (4), in a substantially flush or set-back manner.

9. Mowing machine according to any one of claims 1 to 8, **characterised in that** each bearing (4) is fixed to the housing by means of at least three fixing assemblies (6).

10. Mowing machine according to any one of claims 1 to 9, **characterised in that** a mounting strip (8') for the blades (10) is rigidly connected to the disc (8), these strips (8') having a shape which locally fits substantially snugly with the outer shape of the corresponding bearing (4), with release enabling full rotation of said blades (10) about their respective mounting axes.

11. Mowing machine according to any one of claims 1 to 10, **characterised in that** each orifice (5) formed in the upper wall (3') of the housing (3), traversed by a driven supporting shaft (9) and at the level of which is mounted a bearing (4) for rotatable guiding, has an opening of sufficient size for the passage of each of the different gear elements (16) housed in the housing (3) and ensuring rotary driving of the supporting shafts (9), said orifice (5) being advantageously blocked by said bearing (4) provided with a disc-shaped radial formation constituting a mounting and fixing collar (4') which bears on the upper wall (3') of the housing (3) and has the supporting surfaces (12) for the fixing elements (6) concerned.

12. Mowing machine according to any one of claims 1 to 11, **characterised in that** it comprises, at the level of each fixing assembly (6), a tubular strut (17) extending between the upper (3') and lower (3") walls of the housing (3) and receiving in its through-passage (17') at least one of the fixing elements (6' and 6") forming the assembly concerned (6), preferably at least the zone of mutual engagement or gripping of the screw-connection parts (7, 7') of these two fixing elements (6' and 6").

13. Mowing machine according to claims 5 and 12, **characterised in that** the tubular strut (17) is provided with an internal thread (7'), on at least part of its inner surface, in which the externally threaded parts (7) of the first and second fixing elements (6' and 6") in the form of screws, which may be identical and advantageously have a maximum depth of engagement, engage by screwing.

14. Mowing machine according to claim 12 or 13, **characterised in that** each strut (17) is mounted to bear sealingly under pressure between the lower (3") and upper (3') walls of the housing (3), thus defining a receiving housing which is isolated from the external environment.

15. Mowing machine according to any one of claims 12 to 14, **characterised in that** the struts (17) are, in relation to the direction of advance (A) when the mowing machine (1) is working, situated either in front of or behind the driven supporting shafts (9), the struts situated in front of this shaft (9) having a longitudinal dimension or height which is less than the struts situated behind this shaft (9).

16. Mowing machine according to any one of claims 1 to 15, **characterised in that** the upper (3') and lower (3") walls forming the housing (3) by cooperation each consist of a component in one piece, advantageously formed by stamping, these walls (3' and 3") being preferably assembled by peripheral welding at the level of mutually coinciding assembly collars.
